# EUROPEAN PATENT APPLICATION

(11) **EP 3 321 125 A1**
(43) Date of publication of application: **16.05.2018**
(21) Application number: 16820671.2
(22) Date of filing: 28.03.2016
(51) Int. Cl.: B60M 3/04

(54) **INTELLIGENT ELECTRIC PHASE SPLITTING DEVICE FOR ALTERNATING-CURRENT ELECTRIFIED RAILWAY**

(30) Priority: 06.07.2015 CN 201510390773
(71) Applicant: Beijing Jiaotong University, Beijing 100044 (CN); Beijing Efficiengine Technology LLC, Beijing 100044 (CN)
(72) Inventor: ZHENG, Qionglin, Beijing 100044 (CN); DU, Yuliang, Beijing 100044 (CN); YANG, Xiaofeng, Beijing 100044 (CN); YANG, Jingxi, Beijing 100044 (CN); YOU, Xiaojie, Beijing 100044 (CN); WU, Mingli, Beijing 100044 (CN)
(74) Representative: Roman, Alexis
(86) International application number: PCT/CN2016/077528
(87) International publication number: WO 2017/005017

(57) **Abstract**

The invention discloses a kind of AC electrified railway intelligent neutral section device. It consists of a first switch which connects the first power supply arm to the neutral section and its parallel impedance, a second switch which connects the second power supply arm to the neutral section and its parallel impedance, current and voltage sensors detecting the first switch and current and voltage sensors detecting the second switch etc. The device can automatically identify the train's pantograph position through the voltage information at both ends of the first switch and the second switch and current information flowing from the first switch and the second switch, and automatically close or open the first switch and the close or open the second switch to make the neutral section obtain or cut off the electric energy of power supply arm according to the identified location of the pantograph. The circuit structure of the switch and its parallel impedance can be replaced by the circuit structure of connecting two ends of a step-down transformer and its low-voltage winding to a switch. There is no need to install the train position detection device, with advantages of a simple structure and convenience of use and maintenance.

## Description

### Technical Field

The invention relates to the technical field of passing over of neutral section of electrified railway, especially relates to an AC electrified railway intelligent neutral section device.

### Background Technology

The electrified railway contact network in many countries, including China, adopts a power supply mode of subsection commutation. There is a contact network without electricity between adjacent two phase power supply contact network, which is called neutral section or neutral zone. When the train enters and exits the neutral section, the phenomenon of over voltage is easy to occur, sometimes endangering the safety of train operation. And the running speed of the train will be affected when running in the phase separation area.

In the existing scheme of automatic passing over of neutral section by ground continuous electricity, such an "the scheme of automatic passing over of neutral section converted by ground device" and "the scheme of column type automatic passing over of neutral section", vacuum switch is adopted to cut the load current of the locomotive, and the current impact is very big. It is easy to cause the ignition, a short circuit of the locomotive's main circuit, tripping and other shortcomings. In addition, it has great influence on the working performance and service life of the switch itself. With the development of power electronic technology, at present the related technology of the power electronic devices in high voltage and large current and other applications has been very mature. The use of electronic switches instead of mechanical switches is a trend in the passing over of neutral section by ground, and the electronic switch has the advantages of accurate switching time and long service life.

In the above scheme of automatic passing over of neutral section by ground, it is necessary to install train position detection device, such as magnetic induction device, axle counter, track circuit technology and so on. Magnetic induction device is generally embedded in the track or installed on the specially processed concrete sleeper, requiring regular maintenance. And magnetic sleeper processing costs is high. Moreover, the magnetic induction device is only suitable for the train with speed of no more than 160 km/h. The train position information is accurately detected by an axle counter, which is usually installed on the rail or inside the rail. The axle counter detection device includes indoor and outdoor information detection processing equipment, sensors and signal transmission lines. The installation and maintenance requirements of the device is high, otherwise it will cause lost shaft and other faults. The track circuit technology can only reflect whether a train is on the track, and the track circuit is not reliable, easily affected by the ballast and sleeper leakage and other factors. It cannot meet the demand of the current railway development. In order to realize the accurate switching and other operations of automatic passing over of neutral section by ground, the first requirement of the controller is to have accurate position signal of the locomotive's pantograph, so as to ensure the strict witching action sequence. Therefore, train position detection device must be accurate and reliable, otherwise the accident of neutral zone losing electricity and locomotive running into neutral section etc. will be caused, affecting the safety of traction power supply system and traffic order.

### Summary of the Invention

The technical problem to be solved by the invention is to provide an AC electrified railway locomotive intelligent neutral section device, so as to realize that the train can run through the neutral section without power off. The device has the advantages of simple structure, accurate control of switching time by using electronic switch, long service life, convenient use and maintenance; there is no need to install the train position detection device, and the intelligent neutral section controller can automatically and accurately identify train's pantograph position through obtaining and processing the voltage and current sensor information in the device, to ensure accurate timing of switch action. The technical scheme of the invention is as follows:
It is a kind of AC electrified railway intelligent neutral section device. The described intelligent neutral section device can automatically identify if the train's pantograph 11 will enter the neutral section 3, or has already entered the neutral section 3, or has left from the neutral section 3 through the voltage information of the first switch 6 and the second switch 7 in the device and the current information flowing through the first switch 6 and the second switch 7, and automatically close or open the first switch 6 and close or open the second switch 7 to make the neutral section 3 obtain or cut off the electric energy of power supply arm according to the identified location of the pantograph.

After installing a current sensor, the first switch 6 is connected with the first impedance 4 in parallel, and after installing a current sensor the second switch 7 is connected with the second impedance 5 in parallel. An end of the first switch 6 is connected to the first power supply arm 1, and a voltage sensor is installed on this node; the other end of the first switch 6 and an end of the second switch 7 are jointly connected to the neutral section, and a voltage sensor is installed on this node. The other end of the second switch 7 is connected to the second power supply arm 2, and a voltage sensor is installed on this node.

The described circuit structure of the first switch 6 and the first impedance 4 in parallel with the first switch 6 can be replaced by the circuit structure of the first transformer 9 and the first switch 6 connected with the two ends of the first low-voltage winding 9b; the circuit structure of the second switch 7 and the second impedance 5 in parallel with the second switch 7 can be replaced by the circuit structure of the second transformer 10 and the second switch 7 connected with the two ends of the second low-voltage winding 10b; after the replacement, the two ends of the first high-voltage winding 9a of the first transformer 9 are connected to the original location of the first impedance (4) and plays the role of the first impedance (4); after the replacement, the two ends of the second high-voltage winding (10a) of the second transformer (10) are connected to the original location of the second impedance (5) and plays the role of the second impedance (5); the required current sensor and voltage sensor can be installed either on the side of the first high-voltage winding (9a) and on the side of the second high-voltage winding (10a), or on the side of the first low-voltage winding (9b) and on the side of the second low-voltage winding (10b).

The advantages of AC electrified railway intelligent neutral section device are:
1. The inventive AC electrified railway intelligent neutral section device automatically close and open the first switch and close and open the second switch through the identification of the pantograph position to obtain or cut off the power of the power supply arm in the neutral section. It allows the neutral section to be powered by the first power supply arm and stably switch to the second power supply arm. In this way, when the train enters the second power supply arm from the first power supply arm through the neutral section, it can pass through the neutral section without losing the running speed. At the same time, there is no overvoltage when the train enters the neutral section from the first power supply arm and enters the second power supply arm from the neutral section.
2. Compared with the existing technology, there is no need to install the rain position detection device on the track or near the track for this inventive AC electrified railway intelligent neutral section device. There is also no need to detect the train position by satellite positioning or other means, avoiding the interference between devices and humans, to improve the reliability of the system, and ensuring the safety and high-speed operation of the train.
3. Three transformers are needed to achieve depressurization of the existing neutral section device. While it only needs two transformers for the inventive AC electrified railway intelligent neutral section device, which not only reduces the cost but also reduces the device's size and less area occupied by the device.
4. Compared with the existing technology, this inventive AC electrified railway intelligent neutral section device adopts electronic switch instead of the existing mechanical switch, which has long life, accurate control of switching time, effectively avoiding over current and over voltage when the train gets through the neutral section.
5. This inventive AC electrified railway intelligent neutral section device reduces the voltage amplitude at the two ends of the switch connected to the low-voltage winding through stepping down the transformer, which allows the invention adopts switches of low-voltage or reduce the number of switches in series, to reduce the cost and be easy to implement.

### Brief Description of the Figures

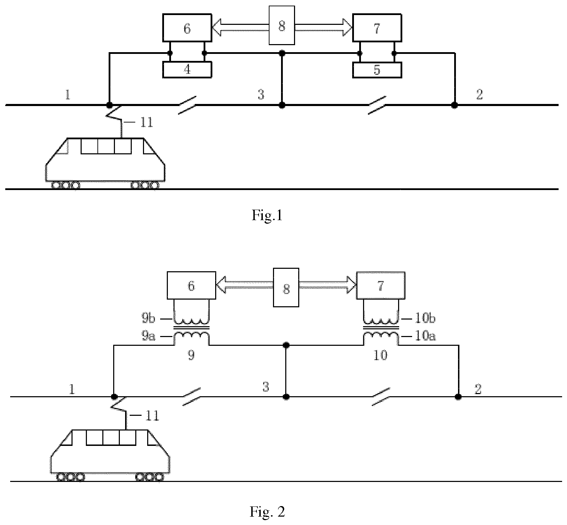

Fig. 1 is a schematic diagram of Example 1 of the present invention. Fig. 2 is a schematic diagram of Example 2 of the present invention.

### Concrete Implementation Methods

The present invention is further illustrated with a following embodiment.

### Example 1

See Figure 1, this inventive AC electrified railway intelligent neutral section device comprises the first impedance 4, the second impedance 5, the first switch 6, the second switch 7 and a controller 8. After installing a current sensor, the first switch 6 is connected with the first impedance 4 in parallel, and after installing a current sensor the second switch 7 is connected with the second impedance 5 in parallel. An end of the first switch 6 is connected to the first power supply arm 1, and a voltage sensor is installed on this node; the other end of the first switch 6 and an end of the second switch 7 are jointly connected to the neutral section, and a voltage sensor is installed on this node. The other end of the second switch 7 is connected to the second power supply arm 2, and a voltage sensor is installed on this node.

The installed voltage and current sensors and control level of the first switch 6 and the second switch 7 in the above device are connected with the controller 8. The controller 8 automatically identifies whether the train's pantograph 11 will enter the neutral section 3, or has already entered the neutral section 3, or has left from the neutral section 3 after obtaining and processing the information of voltage and current sensors, and automatically close or open the first switch 6 and close or open the second switch 7 to make the neutral section 3 obtain or cut off the electric energy of power supply arm according to the identified location of the pantograph.

### Example 2

See Figure 2, this inventive AC electrified railway intelligent neutral section device comprises the first switch 6, the second switch 7, a controller 8, the first transformer 9 and the second transformer 10, among which the described first transformer 9 includes a first high-voltage winding 9a and a first low-voltage winding 9b, and the described second transformer 10 includes a second high-voltage winding 10a and a second low-voltage winding 10b. The first switch 6 is connected with the two ends of first low-voltage winding 9b, and the second switch 7 is connected with the two ends of the second low-voltage winding 10b. The first high-voltage winding 9a is respectively connected with the first power supply arm 1 and the neutral section 3, and The second high-voltage winding 10a is respectively connected with the second power supply arm 2 and the neutral section 3. The required current sensor and voltage sensor can be installed either on the side of the first high-voltage winding 9a and on the side of the second high-voltage winding 10a, or on the side of the first low-voltage winding 9b and on the side of the second low-voltage winding 10b.
The installed voltage and current sensors and control level of the first switch 6 and the second switch 7 in the above device are connected with the controller 8. The controller 8 automatically identifies whether the train's pantograph 11 will enter the neutral section 3, or has already entered the neutral section 3, or has left from the neutral section 3 after obtaining and processing the information of voltage and current sensors, and automatically close or open the first switch 6 and close or open the second switch 7 to make the neutral section 3 obtain or cut off the electric energy of power supply arm according to the identified location of the pantograph.
The working processes of this inventive AC electrified railway intelligent neutral section device are as follows:
Usually when there is no train approaching the neutral section 3, the controller 8 makes the first switch 6 and the second switch 7 open, and the neutral section 3 has a fixed voltage. When the train pulls into the neutral section 3 from the first power supply arm 1, from left to right, the controller 8 automatically identifies that the train's pantograph 11 will enter the neutral section 3 by detecting and processing the voltage information at both ends of the first switch 6 and the second switch 7 and the current information flowing through the first switch 6 and the second switch 7, and makes the first switch 6 close. Therefore, the first power supply arm 1 is connected with the neutral section 3 through the first switch 6, so that the neutral section 3 is powered by the first power supply arm 1. Thus, it realizes that the train pulls into the neutral section 3 from the first power supply arm 1 without power failure. After the controller 8 detects and processes the voltage information at both ends of the first switch 6 and the second switch 7 and the current information flowing through the first switch 6 and the second switch 7, it is ensured that the train runs in the neutral section 3 and only takes power from the neutral section 3. After a certain delay time, the controller 8 makes the first switch 6 open. After the first switch 6 is open for a period of time, the controller 8 makes the second switch 7 close. Therefore, the second power supply arm 2 is connected with the neutral section 3 through the second switch, so that the neutral section 3 is powered by the second power supply arm 2. Thus, it realizes that the train pulls into the neutral section 3 from the second power supply arm 2 without power failure. After the controller 8 detects and processes the voltage information at both ends of the first switch 6 and the second switch 7 and the current information flowing through the first switch 6 and the second switch 7, it is ensured that the train runs in the second power supply arm 2 and only takes power from the second power supply arm 2. After a certain delay time, the controller 8 makes the second switch 7 open. Thus, the device makes it achieved that the train runs over the neutral section 3 without power failure and that the power supply for the train is converted from the first power supply arm 1 to the second power supply arm 2.
In example 2, when the voltage and current sensors are mounted on the sides of the first high-voltage winding 9a and the second high-voltage winding 10a instead of the related positions of the first switch 1 and the second switch 2, the controller 8 has the same processing mode.
When the train pulls into the neutral section 3 from the second power arm 2, from the right to left, the working process of the device is consistent with the above process, and the control sequence of switch is opposite.
The content without being described in this instruction belongs to the current technology known to professional and technical personnel in this field.

The implementations described in the above examples are only better ones of the invention, not to limit the scope of implementation of the invention. Therefore, all equivalent changes or modification made according to the structure, characteristics and principle described in the scope of patent application of this invention should be included within the scope of patent application of this invention.

## Claims

1. It is a kind of AC electrified railway intelligent neutral section device, whose characteristics are that: the intelligent neutral section can automatically identify if the train's pantograph will enter the phase-separating section (3), or has already entered the phase-separating section (3), or has left from the phase-separating section (3) through the voltage information of the first switch (6) and the second switch (7) in the device and the current information flowing through the first switch (6) and the second switch (7), and automatically close or open the first switch (6) and close or open the second switch (7) to make the phase-separating section (3) obtain or cut off the electric energy of power supply arm according to the identified location of the pantograph.

2. AC electrified railway intelligent neutral section device according to claim 1, wherein: after installing a current sensor, the first switch (6) is connected with the first impedance (4) in parallel, and after installing a current sensor the second switch (7) is connected with the second impedance (5) in parallel; an end of the first switch (6) is connected to the first power supply arm (1), and a voltage sensor is installed on this node; the other end of the first switch (6) and an end of the second switch (7) are jointly connected to the phase-separating section, and a voltage sensor is installed on this node. The other end of the second switch (7) is connected to the second power supply arm (2), and a voltage sensor is installed on this node.

3. AC electrified railway intelligent neutral section device according to claim 2, wherein: the circuit structure of the first switch (6) and the first impedance (4) in parallel with the first switch (6) can be replaced by the circuit structure of the first transformer (9) and the first switch (6) connected with the two ends of the first low-voltage winding (9b); the circuit structure of the second switch (7) and the second impedance (5) in parallel with the second switch (7) can be replaced by the circuit structure of the second transformer (10) and the second switch (7) connected with the two ends of the second low-voltage winding (10b); after the replacement, the two ends of the first high-voltage winding (9a) of the first transformer (9) are connected to the original location of the first impedance (4) and plays the role of the first impedance (4); after the replacement, the two ends of the second high-voltage winding (10a) of the second transformer (10) are connected to the original location of the second impedance (5) and plays the role of the second impedance (5); the required current sensor and voltage sensor can be installed either on the side of the first high-voltage winding (9a) and on the side of the second high-voltage winding (10a), or on the side of the first low-voltage winding (9b) and on the side of the second low-voltage winding (10b).
